# EUROPÄISCHE PATENTANMELDUNG

(11) **EP 0 597 219 A1**
(43) Veröffentlichungstag der Anmeldung: **18.05.1994**
(21) Anmeldenummer: 93115228.4
(22) Anmeldetag: 22.09.1993
(51) Int. Cl.: B29C 31/04, B29C 47/50

(54) **Extruder zum dosierten Zuführen von Kunststoff oder Kunststoffmischungen**

(30) Priorität: 07.11.1992 DE 9215192 U
(71) Anmelder: Stegmaier, Peter, D-73630 Remshalden (DE)
(72) Erfinder: Stegmaier, Peter, D-73630 Remshalden (DE)
(74) Vertreter: Dreiss, Fuhlendorf & Steimle Patentanwälte

(57) **Zusammenfassung**

Ein Extruder zum dosierten Zuführen von Kunststoff oder Kunststoffmischungen in eine Preßform (14) ist mit einer Misch- und Förderschnecke (2), einem der Schnecke (2) nachgeschalteten Zwischenspeicher (7) für die von der Schnecke (2) plastifizierte Preßmasse und mindestens einem den Zwischenspeicher (6) mindestens teilweise entleerenden Kolben (6') und einem Verbindungskanal (4) vom Zwischenspeicher (6) zur Preßform (14) versehen. Um einen derartigen Extruder so auszubilden, daß eine exakte Dosierung auch bei der Verwendung unterschiedlichster Preßformen ermöglicht wird, ist vorgesehen, daß dem Zwischenspeicher (6) eine Absperrvorrichtung (8) nachgeschaltet ist, daß anschließend ein Dosierzylinder (7) angeordnet ist, der über den Verbindungskanal (14) mit einer Austragdüse (5) verbunden ist, und daß diese Austragdüse (5) und/oder der Verbindungskanal (4) durch eine weitere Absperrvorrichtung (9) verschließbar ist.

## Beschreibung

Die Erfindung betrifft einen Extruder zum dosierten Zuführen von Kunststoffmischungen in eine Preßform mit einer Misch- und Förderschnecke, einem der Schnecke nachgeschalteten, Zwischenspeicher für die von der Schnecke plastifizierte Preßmasse und mindestens einem den Zwischenspeicher mindestens teilweise entleerenden Kolben und einem Verbindungskanal vom Zwischenspeicher zur Preßform.

Bei einem solchen aus der DE-A-1 963 166 bekannten Extruder ist die Preßform direkt am Gehäuse des Zwischenspeichers angeordnet. Die Preßform ist immer über den Verbindungskanal mit der Schnecke verbunden, so daß eine exakte Preßmassendosierung nicht möglich ist. Offene Preßformen können mit einem solchen Extruder nicht mit Kunststoff oder einer Kunststoffmischung versorgt werden.

Aufgabe der vorliegenden Erfindung ist es, einen Extruder der eingangs genannten Art so auszubilden, daß eine exakte Dosierung auch bei der Verwendung unterschiedlichster Preßformen ermöglicht wird.

Zur Lösung dieser Aufgabe sieht die Erfindung vor, daß dem Zwischenspeicher eine Absperrvorrichtung nachgeschaltet ist, daS anschließend ein Dosierzylinder vorgesehen ist, der über den Verbindungskanal mit einer Austragdüse verbunden ist, und daß diese Austragdüse und/oder der Verbindungskanal durch eine weitere Absperrvorrichtung abschließbar ist.

Durch die Anordnung einer Absperrvorrichtung nach dem Zwischenspeicher wird sichergestellt, daß keine Preßmasse in den Dosierzylinder nachströmen kann. Die Schnecke arbeitet kontinuierlich, so daß konstante Betriebsbedigungen leicht einhaltbar sind. Die plastifizierte verpreßbare Preßmasse kann praktisch kontinuierlich in den Zwischenspeicher strömen, und es kann der kontinuierliche Strom nach dem Öffnen der Absperrvorrichtung in den Dosierzylinder umgeleitet werden, bis dieser mit der gewünschten Preßmassenmenge aufgefüllt ist. Nach dem Absperren der Absperrvorrichtung kann die weitere Absperrvorrichtung vor der Austragdüse geöffnet und durch den Dosierzylinder die Preßmasse dosiert der Preßform zugeführt werden. Durch eine entsprechend exakte Steuerung des Preßkolbens des Dosierzylinders kann eine exakt bemessene Volumenmenge der Preßmasse in die Preßform ausgestoßen werden. Dabei kann auch der zeitliche Volumenstrom den Bedürfnissen angepaßt gesteuert werden.

Besonders vorteilhaft kann die Kunststoffausbringung aus der Austragdüse punktförmig, linienförmig, flächig und auch räumlich variabel bei komplizierten Preßformen erfolgen, wobei hier die am Ende des Verbindungskanals angeordnete Austragdüse über eine Wegsteuerung relativ zur Preßform steuerbar ist.

Der Verbindungskanal kann mindestens teilweise durch mehrere, dicht hintereinander angeordnete, gelenkig verbundene Rohrstücke gebildet sein, wobei die gelenkige Verbindung eine räumliche Bewegung der Rohrstücke gegeneinander ermöglicht, so daß praktisch jeder Punkt einer offenen Preßform durch die Austragdüse angesteuert und mit Preßmasse örtlich volumengenau versorgt werden kann.

Besonders vorteilhaft kann mindestens ein Teilbereich des Verbindungskanals temperaturregelbar sein. Dabei können Heiz- und/oder Külvorrichtungen vorgesehen sein, um so auch unterschiedliche Kunststoffe bzw. Kunststoffmischungen optimal verarbeiten zu können. Entsprechend kann auch der Extruder und/oder der Zwischenspeicher und/oder der Dosierzylinder und/oder die Austragdüse temperaturregelbar sein.

Mit der vorgeschlagenen Vorrichtung kann insbesondere eine Kunststoffmischung nicht sortenreiner ungereinigter und vermischter Recyclingkunststoffe verarbeitet werden. Dem Kunststoffmaterial können auch Additive beigemsicht sein, wie z.B. Metall in Form von Pulver oder Granulaten. Es können auch Glasfasern, Holzwerkstoffe und nichtthermoplastische Kunststoffe beigemischt werden, die sonst praktisch nicht recycelbar sind.

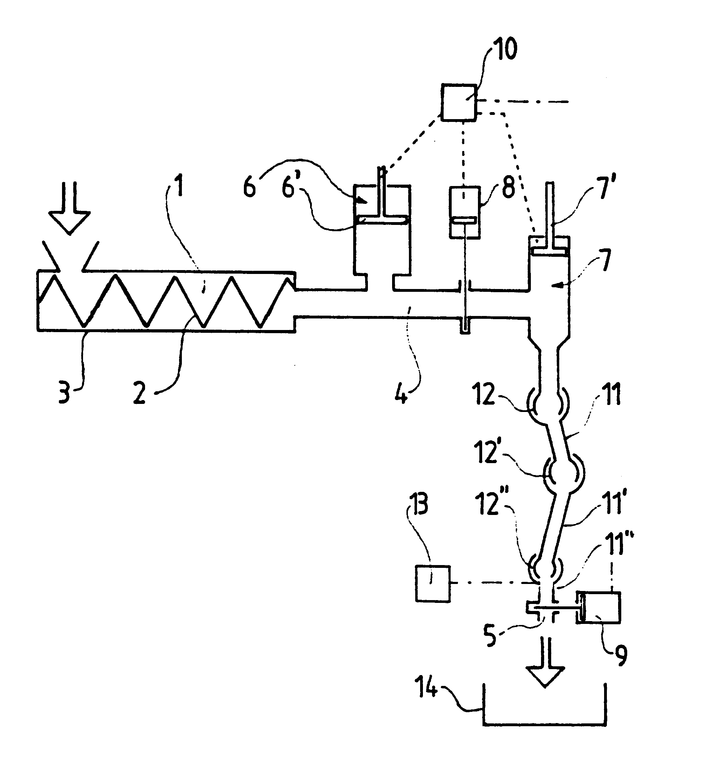

Weitere erfindungsgemäße Ausbildungen sind den Unteransprüchen zu entnehmen und werden mit ihren Vorteilen anhand der beigefügten Zeichnung in der nachstehenden Beschreibung näher erläutert.

In der einzigen beigefügten Zeichnung ist ein Ausführungsbeispiel schematisch dargestellt. Ein Extruder 1 weist zur Plastifizierung und Förderung eines Kunststoffs oder einer Kunststoffmischung eine Schnecke 2 auf. Der Mantel 3 der Schnecke 2 kann je nach den Betriebsbedingungen und der verarbeiteten Kunststoffmischung ggf. sektorenweise beheiz- und/oder kühlbar sein.

Das Förderende der Schnecke ist über einen Verbindungskanal 4 mit einer Austragdüse 5 verbunden. Auch dieser Verbindungskanal 4 kann ggf. sektorenweise beheizbar und/oder kühlbar sein.

Mit dem Verbindungskanal 4 steht ein Zwischenspeicher 6 und ein Dosierzylinder 7 in Verbindung. Zwischen dem Zwischenspeicher 6 und dem Dosierzylinder 7 ist eine Absperrvorrichtung 8 vorgesehen, durch die der Verbindungskanal 4 abgesperrt werden kann.

Am Ende des Verbindungskanals 4 im Bereich der Austragdüse 5 ist eine weitere Absperrvorrichtung 9 vorgesehen. Auch durch diese weitere Absperrvorrichtung 9 kann der Verbindungskanal 4 abgesperrt werden.

Sowohl der Zwischenspeicher 6 als auch der Dosierzylinder 7 weisen Kolben 6' bzw. 7'auf, deren Bewegung z.B. über eine elektronische Steuerung 10 steuerbar ist. Über diese elektronische Steuerung können auch die Absperrvorrichtungen 8 und 9 gesteuert sein.

Der dem Dosierzylinder 7 nachgeschaltete Teil des Verbindungskanals 4 ist flexibel ausgebildet. Im Ausführungsbeispiel besteht er aus drei miteinander dicht verbundenen Rohrstücken 11,11',11". Die Rohrstücke 11,11',11" sind über Kugelgelenke 12,12',12" räumlich gelenkig miteinander verbunden, so daß die Austragdüse 5 über eine hier nur schematisch angedeutete Wegsteuerung 13 über einer Preßform 14 bewegbar ist, so daß diese Preßform gesteuert dosiert mit der Preßmasse beschickbar ist. Die Preßmassenausbringung kann punktförmig, linienförmig, flächig und durch eine gesteuerte Verweilzeit örtlich auch räumlich unterschiedlich mit Preßmasse befüllt werden, so daß auch ganz komplizierte Preßformen 14 optimal mit Kunststoff oder Kunststoffmischung beschickbar sind.

Die Funktionsweise des Extruders 1 ist folgende: Die Schnecke 2 dreht kontinuierlich und plastifiziert und fördert in stetigem Strom Kunststoff oder die Kunststoffmischung in den Verbindungskanal 4. Ist die Absperrvorrichtung 8 geschlossen, so strömt die Kunststoffmasse in den Speicherzylinder 6.

Zum Füllen des Dosierzylinders 7 ist die weitere Absperrvorrichtung 9 geschlossen, während die Absperrvorrichtung 8 geöffnet ist. Bei gleichzeitiger Preßmassenförderung der Schnecke 2 in den Verbindungskanal 4 wird der Kolben 6' des Zwischenspeichers 6 nach unten gepreßt, während der Kolben 7' des Dosierzylinders 7 nach oben verschoben wird und so ein vorgebbares Volumen preßmasse aufnimmt. Danach wird die Absperrvorrichtung 8 verschlossen, die Austragdüse 5 über die Preßform 14 an die gewünschte Beschickungsstelle gebracht. Dann wird die weitere Absperrvorrichtung 9 geöffnet und durch gesteuertes Nachuntenpressen des Kolbens 7' des Dosierzylinders 7 die gewünschte Preßmasse ggf. unter Weiterbewegung der Austragdüse 5 über der Preßform 14 ausgepreßt, wobei der zeitliche Volumenstrom durch die elektronische Steuerung 10 vorgebbar ist. Nach dem Ausstoßen der gewünschten Preßmassenmenge wird die weitere Absperrvorrichtung 9 geschlossen und der Beschickungsvorgang des Dosierzylinders 7 wieder in die Wege geleitet.

Während des dosierten Auspressens der Preßmasse aus dem Dosierzylinder 7 wird kontinuierlich der Zwischenspeicher 6 von der Schnecke 2 wieder mit Preßmasse versorgt.

## Patentansprüche

1. Extruder zum dosierten Zuführen von Kunststoff oder Kunststoffmischungen in eine Preßform (14) mit einer Misch- und Förderschnekke (2), einem der Schnecke (2) nachgeschalteten Zwischenspeicher (7) für die von der Schnecke (2) plastifizierte Preßmasse und mindestens einem den Zwischenspeicher (6) mindestens teilweise entleerenden Kolben (6') und einem Verbindungskanal (4) vom Zwischenspeicher (6) zur Preßform (14), dadurch gekennzeichnet, daß dem Zwischenspeicher (6) eine Absperrvorrichtung (8) nachgeschaltet ist, daß anschließend ein Dosierzylinder (7) vorgesehen ist, der über den Verbindungskanal (14) mit einer Austragdüse (5) verbunden ist, und daß diese Austragdüse (5) und/oder der Verbindungskanal (4) durch eine weitere Absperrvorrichtung (9) verschließbar ist.

2. Extruder nach Anspruch 1, dadurch gekennzeichnet, daß jeweils mindestens eine der beiden Absperrvorrichtungen (8,9) geschlossen ist.

3. Extruder nach Anspruch 1 oder 2, dadurch gekennzeichnet, daß die am Ende des Verbindungskanals (4) angeordnete Austragdüse (5) über eine Wegsteuerung (13) relativ zur Preßform (14) steuerbar ist.

4. Extruder nach Anspruch 3, dadurch gekennzeichnet, daß der Verbindungskanal (4) mindestens teilweise durch mehrere dicht hintereinander angeordnete, gelenkig verbundene Rohrstücke (11,11',11'') gebildet ist.

5. Extruder nach Anspruch 4, dadurch gekennzeichnet, daß die gelenkige Verbindung der Rohrstücke (11,11',11") eine räumliche Bewegung der Rohrstücke (11,11',11") gegeneinander ermöglicht.

6. Extruder nach Anspruch 4 oder 5, dadurch gekennzeichnet, daß die gelenbkige Verbindung durch Kugelgelenke (12,12',12") gebildet ist.

7. Extruder nach einem der Ansprüche 1 bis 6, dadurch gekennzeichnet, daß mindestens Teilbereiche des Verbindungskanals (4) temperaturregelbar sind.

8. Extruder nach einem der Ansprüche 1 bis 7, dadurch gekennzeichnet, daß der Extruder (1) und/oder der Zwischenspeicher (6) und/oder der Dosierzylinder (7) und/oder die Austragdüse (5) temperaturregelbar sind.

9. Extruder nach einem der Ansprüche 1 bis 8, dadurch gekennzeichnet, daß als Kunststoffmischung nicht sortenreiner, ungereinigter und vermischter Recyclingkunststoff dient.

10. Extruder nach Anspruch 9, dadurch gekennzeichnet, daß die Kunststoffmischung Beimischungen von Metallpulver, -granulat, Fasern, bspw. Glasfasern, Holzwerkstoff, und/oder nichtthermoplastische Kunststoffe enthält.

11. Extruder nach einem der Ansprüche 1 bis 10, dadurch gekennzeichnet, daß die Führung zwischen dem Kolben (6',7') und seiner Zylinderwand vom Zwischenspeicher (6) und/oder Dosierzylinder (7) durch eine hochfeste Metalldichtung gebildet ist.
